# EUROPEAN PATENT SPECIFICATION

(11) **EP 4 014 426 B1**
(45) Date of publication and mention of the grant of the patent: **24.06.2026**
(21) Application number: 20744085.0
(22) Date of filing: 29.07.2020
(51) Int. Cl.: H04L 9/08

(54) **IMPROVEMENTS TO QKD METHODS**
VERBESSERUNGEN AN QKD-VERFAHREN
AMÉLIORATIONS PORTANT SUR DES PROCÉDÉS QKD

(30) Priority: 12.08.2019 EP 19191192
(43) Date of publication of application: 22.06.2022
(73) Proprietor: British Telecommunications public limited company, London E1 8EE (GB)
(72) Inventor: LORD, Andrew, London EC4V 5BT (GB)
(74) Representative: British Telecommunications public limited company Intellectual Property Department
(86) International application number: PCT/EP2020/071445
(87) International publication number: WO 2021/028227

(56) References cited:
- US-A1- 2007 076 883
- ZHI-ROU LIU ET AL: "Mediated Semi-Quantum Key Distribution Without Invoking Quantum Measurement", ANNALEN DER PHYSIK., vol. 530, no. 1700206, 29 January 2018 (2018-01-29), DE, pages 1 - 9, XP055639202, ISSN: 0003-3804, DOI: 10.1002/andp.201700206
- WILLIAM STACEY ET AL: "The Security of Quantum Key Distribution using a Simplified Trusted Relay", ARXIV.ORG, CORNELL UNIVERSITY LIBRARY, 201 OLIN LIBRARY CORNELL UNIVERSITY ITHACA, NY 14853, 19 August 2014 (2014-08-19), XP081391156, DOI: 10.1103/PHYSREVA.91.012338

## Description

QKD (Quantum Key Distribution) is a known method of highly-secure communication which enables two parties to produce a shared secret key. In one example of a QKD network, there is a transmitting unit (referred to as Alice) which prepares a single photon pulse in a randomly-chosen basis state, and encodes the pulse with a randomly-chosen bit value of 0 or 1. The basis state could be, for example, a polarisation state (e.g. rectilinear or diagonal). The pulse is then transmitted to a receiving unit (referred to as Bob) which measures the value encoded onto it in its own randomly-chosen basis state. The process is repeated for each of a string of pulses. Alice and Bob then exchange information relating to the basis states that each used. They use that information to discard from their records, the bit values of pulses for which the basis state Alice used was different to the basis state Bob used. This leaves Alice and Bob with the same list of bit values (i.e. a list of 1's and 0's) which constitutes a shared secret quantum key.

This secret quantum key is considered to be very secure because any attempt to intercept the transmission of the pulses by an eavesdropper causes the bit values encoded onto them to be irretrievably lost. This loss of data can be detected by Alice and Bob during checking procedures.

A problem with QKD systems is that the distance optical pulses can travel in an optical fibre is limited, the largest possible distance being about 200km. Therefore if two communicating parties are located further apart than this distance, QKD will not work. Furthermore, due to their large expense, QKD systems are found in only a limited number of places in the world. These factors mean that QKD systems are not a realistic option for many companies that would otherwise choose to use them.

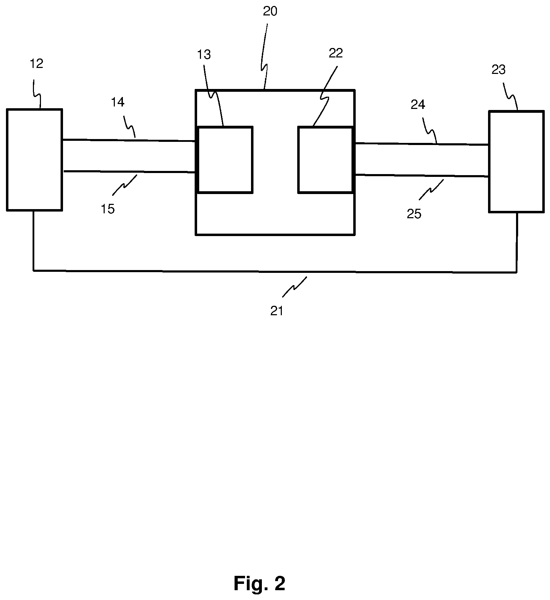

Attempts to address this problem have included using a secure "trusted node". The trusted node is placed in the optical path between the two parties (e.g. two companies) that wish to communicate securely (one company being located at a transmitter (Alice) and the other at a receiver (Bob)). The trusted node contains a receiver (i.e. a Bob) and a transmitter (i.e. an Alice). The first company establishes a quantum key with the Bob in the trusted node. The second company establishes a separate quantum key in the manner described above, with the Alice in the trusted node. The two companies can therefore communicate securely with each other over twice the distance that was previously possible. This process is described in greater detail below, with reference to Fig. 2. A disadvantage of this technique is that the distance between Alice and Bob is not significantly increased. Furthermore, this technique necessitates the establishing of two separate quantum keys.

Zhi-Rou Liu and Tzonelih Hwang: "Mediated Semi-Quantum Key Distribution Without Invoking Quantum Measurement" discloses a new semi-quantum key distribution protocol, allowing two 'classical' participants without sophisticated quantum capability to establish a shared secret key under an untrusted third party (a quantum server).

It would be desirable to provide an improved QKD system which overcomes and/or mitigates some or all of the above-mentioned and/or other disadvantages associated with the prior art.

According to a first aspect of the invention there is provided a method of performing Quantum Key Distribution (QKD) for generating a shared secret key, the method comprising
at a first node, preparing or measuring a plurality of non-orthogonal quantum states, each of the plurality of non-orthogonal quantum states being prepared or measured using a respective one of a first set of basis states,
at a second node, preparing or measuring the plurality of non-orthogonal quantum states each, of the plurality of non-orthogonal quantum states being prepared or measured using a respective one of a second set of basis states,
at a third node, obtaining an indication of the first set of basis states from the first node and performing a key agreement stage with a fourth node to agree the shared secret key, the key agreement stage involving the first and second sets of basis states.

In some embodiments the fourth node is the second node. In preferred embodiments the fourth node is different to the second node.

The invention is intended for use with any protocol, such as prepare-and-measure protocols or entanglement protocols. In methods performed in accordance with entanglement protocols, the method may comprise, at the first node, measuring the plurality of non-orthogonal quantum states, and may further comprise, at the second node, measuring the plurality of non-orthogonal quantum states. In methods performed in accordance with prepare-and-measure protocols, the method may comprise, at the first node, preparing the plurality of non-orthogonal quantum states, and may further comprise, at the second node, measuring the plurality of non-orthogonal quantum states.

The step of preparing a plurality of non-orthogonal quantum states may comprise encoding a respective bit value onto each of the plurality of non-orthogonal quantum states. The step of measuring a plurality of non-orthogonal quantum states may comprise measuring a bit value for each of the plurality of non-orthogonal quantum states.

The invention is applicable to both discrete-variable QKD (DV-QKD) and continuous-variable QKD (CV-QKD). In embodiments using DV-QKD, the first and second sets of basis states may be polarisation states such as rectilinear and diagonal. Furthermore, the bit values encoded onto the plurality of non-orthogonal quantum states may be discrete values such as ones and zeroes. In embodiments using CV-QKD, the first and second sets of basis states may be quadratures such as position and momentum. Furthermore, the bit values encoded onto the plurality of non-orthogonal quantum states may be non-discrete values such as Gaussian values.

The step of, at the third node, obtaining the first set of basis states from the first node may comprise obtaining the first set of basis states from the third node directly and may comprise transmitting the first set of basis states from the first node to the third node. This may take place via an optical link.

The first node and/or the second node may be quantum nodes. The method may further comprise transmitting the plurality of non-orthogonal quantum states from the first node to the second node. The step of transmitting the plurality of non-orthogonal quantum states from the first node to the second node may take place of over a quantum channel which may be and optical fibre or may be free space.

The step of encoding a bit value onto each of the plurality of non-orthogonal quantum states may comprise generating a plurality of random bit values which may be generated using a random number generator. The first set of basis states may be randomly-chosen using a random number generator. The second set of basis states to the plurality of non-orthogonal quantum states may be randomly-chosen using a different random number generator.

The method may further comprise, for each of the plurality of non-orthogonal quantum states, making a record of the bit value encoded onto the quantum state and/or making a record of the which of the first set of basis states the quantum state is prepared in and/or making a record of the time of transmission of the quantum state from the first node.

The method may further comprise, for each of the plurality of non-orthogonal quantum states, making a record of the measured bit value of the quantum state and/or making a record of the which of the second set of basis states is used to measure the quantum state and/or making a record of the time of receipt of the quantum state at the second node.

The method may further comprise performing an authentication check between the third node and the fourth node. The authentication check may comprise the fourth node sending the third node information establishing the identity of the fourth node. The authentication check may comprise the third node sending the fourth node information establishing the identity of the third node.

The method further comprises determining the bit values encoded onto those ones of the plurality of non-orthogonal quantum states which were prepared and measured in the same basis state. This may comprise transmitting, from the fourth node to the third node, an indication of the basis states that were used to measure the plurality of non-orthogonal quantum states. Alternatively this may comprise transmitting, from the third node to the fourth node, an indication of the basis states that were used to prepare the plurality of non-orthogonal quantum states. In either case, the method may further comprise comparing the indication of the basis states that were used to measure the plurality of non-orthogonal quantum states with the basis states that were used to prepare the plurality of non-orthogonal quantum states. The method may further comprise transmitting an indication of the common basis states from the third node to the fourth node or vice versa. The bit values corresponding to the common basis states may constitute the shared quantum key. The transmissions between the third and fourth nodes may be encrypted.

The third and fourth node may perform encrypted communication using the shared quantum key. This may comprise encrypting data at the third node using the secret key. The encrypted data may be sent to the fourth node. The data may be decrypted at the fourth node. The third node may be a customer premises.

The method may further comprise transmitting, from the first node to the third node, an indication of the bit values encoded onto the plurality of non-orthogonal quantum states and/or an indication of which of the first set of basis states were used to prepare the plurality of non-orthogonal quantum states and/or an indication of the time of transmission of the plurality of non-orthogonal quantum states from the first node. These transmissions between the first node and the third node may be encrypted. The encryption may be symmetric key encryption and may be AES512. The information contained in these transmissions may be transmitted without being stored in the first node.

These transmissions between the first and third nodes may take place via optical fibre. The third node may be located remotely from the first node. The third node may be located more than 10km from the first node. The third node may be located more than 100km from the first node. The third node may be located more than 1000km from the first node.

The method may further comprise transmitting, from the second node to the fourth node, an indication of the measured bit values of the plurality of non-orthogonal quantum states and/or an indication of the which of the second set of basis states were used to measure the plurality of non-orthogonal quantum states and/or an indication of the time each of the plurality of non-orthogonal quantum states were received at the second node from the first node. These transmissions between the second and fourth nodes may take place via an optical fibre and may be encrypted. The encryption may be symmetric key encryption and may be AES512. The information contained in these transmissions may be transmitted without being stored in the second node. The second node may be located remotely from the fourth node. The second node may be located more than 10km from the fourth node. The second node may be located more than 100km from the fourth node. The second node may be located more than 1000km from the fourth node.

In some embodiments the first node may be located aboard a satellite. The second node may be located in a ground station. Transmissions between the first and second nodes may take place via the atmosphere. In these embodiments, the fourth node may be located in a customer's premises. Transmissions between the second and fourth nodes may take place via by optical fibre. These transmissions between the second and fourth nodes may be encrypted. The encryption may be symmetric key encryption and may be AES512. The second node may be located remotely from the fourth node. The second node may be located more than 10km from the fourth node. The second node may be located more than 100km from the fourth node. The second node may be located more than 1000km from the fourth node. The third node may be located in a different customer premises, which may be remote from the first. The transmissions from the first node to the third node may pass through a second ground station. The transmissions between the first node and the second ground station may be QKD encrypted.

In some embodiments there is a fifth node and a sixth node. In these embodiment the fifth and sixth nodes perform a key agreement stage as defined in relation to the third and fourth nodes. The fifth and six nodes thus comprise a second key agreement pair, the first key agreement pair being the third and fourth node. Further embodiments may comprise a plurality of such key agreement pairs.

The method may further comprise performing a check for whether the plurality of non-orthogonal quantum states have been intercepted by an eavesdropper. This may comprise comparing the bit values encoded onto a portion of the plurality of non-orthogonal quantum states with the measured bit values for that portion of the plurality of non-orthogonal quantum states. The check may further comprise sending, from the third node to the fourth node, an indication of the bit values that have been encoded onto the plurality of non-orthogonal quantum states. Alternatively, the check may comprise sending, from the fourth node to the third node, an indication of the bit values that were measured in relation to the plurality of non-orthogonal quantum states. The method may further comprise discontinuing the method of performing QKD if more than a threshold number of the encoded bit values for the portion of the plurality of non-orthogonal quantum states are found to be different to the measured bit values for the portion of the plurality of non-orthogonal quantum states. In alternative embodiments, the check for whether the plurality of pulses has been intercepted by an eavesdropper is instead performed between the first node and the second node.

According to a second aspect of the invention there is provided an arrangement for performing QKD in order to generate a shared secret key, the arrangement comprising: a first node and a second node
the first node being adapted to prepare or measure a plurality of non-orthogonal quantum states using a respective one of a first set of basis states,
the second node being adapted to prepare or measure a plurality of non-orthogonal quantum states using a respective one of a second set of basis states,,
the arrangement further comprising a third node and a fourth node,
the third node being adapted to obtain an indication of the first set of basis states from the first node, and to perform a key agreement stage with the fourth node to agree the shared secret key, the key agreement stage involving the first and second sets of basis states.

The invention will now be described in detail, for illustration purposes only, and with reference to the appended drawings, in which:
Fig. 1 is a schematic view of a known QKD arrangement;
Fig. 2 is a schematic view of a further known QKD arrangement;
Fig. 3 is a schematic view of a first embodiment in accordance with the invention;
Fig. 4 is a schematic view of a second embodiment in accordance with the invention.

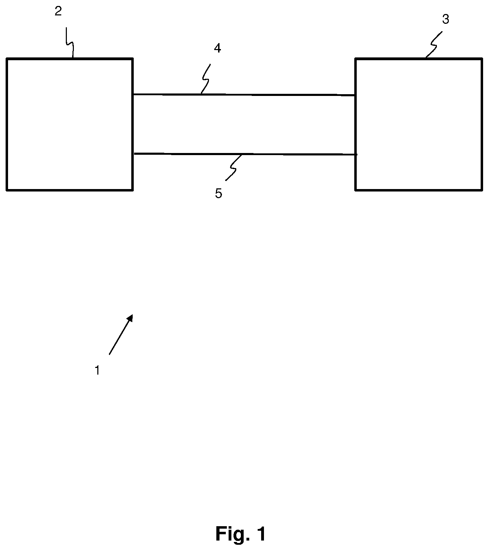

Figure 1 shows a known QKD arrangement 1 operating on the BB84 protocol. It comprises a transmitter 2 (referred to as Alice) and a receiver 3 (referred to as Bob). Alice 2 is connected to Bob 3 by a quantum communication channel 4 and also by a classical (i.e. non-quantum) communication channel 5. The quantum channel 4 is an optical fibre and the classical channel 5 is also an optical fibre.

The process of QKD involves two stages: the quantum transmission stage and the key agreement stage. The quantum transmission stage involves, at Alice 2, encoding a randomly-chosen bit value (1 or 0) onto an optical pulse, then preparing the pulse in one of two basis states (again, randomly chosen), and then transmitting the pulse to Bob 3 via the quantum channel 4. Alice uses a random number (RNG) generator (not shown) to obtain the random 1 or 0 value and uses a different RNG to obtain the random basis state. In the example of QKD described here, preparing the pulse in a basis state means preparing the pulse in a particular polarisation state. In the first basis state the direction of polarisation is rectilinear. In the second basis state the direction of polarisation is diagonal, i.e. at 45° to the rectilinear direction.

Bob receives the pulse transmitted by Alice. Bob measures the pulse by randomly choosing one of the two basis states, and measuring the received pulse in that basis state and measuring the bit value. If the basis state Bob has chosen happens to be the same as the basis state Alice used, the bit value Bob measures will be the same as the bit value Alice used. If Bob's basis state is not the same as Alice's, the bit value Bob measures will be a random value. This process is repeated on each of a string of pulses. For each pulse, Alice records the time of transmission, the bit value that Alice encodes onto the pulse and the basis state Alice uses. Bob records the time of receipt of the pulse, the basis state that Bob uses and the bit value that Bob measures.

Next comes the key agreement stage. Bob sends Alice a list containing, for each pulse in the string received by Bob: (i) the time Bob received the pulse and (ii) the basis state that Bob measured the pulse in. Alice then replies to Bob, indicating which of the pulses Bob measured using the same basis state that Alice used. Each of Alice and Bob then discard their bit values which correspond to pulses for which Alice and Bob used different basis states. This leaves Alice and Bob with the same list of bit values (i.e. 1's and 0's). This list is a quantum key which Alice and Bob can use to encrypt messages for sending between them via a classical channel.

As noted above, a problem is that the pulses do not propagate over large distances in optical fibre. This means that it is not possible to establish a quantum key between remote nodes. A prior art system for addressing this is shown at Fig 2. Fig 2 shows an Alice 12, which I will refer to as first Alice 12, a Bob 23 which I will refer to as second Bob 23 and a trusted node 20. Trusted node 20 contains a Bob (first Bob 13) which is connected to first Alice 12 by both quantum and classical channels. Trusted node 20 also contains an Alice (second Alice 22) which is connected to second Bob 23 by both quantum and classical channels. First Alice 12 and second Bob 23 are connected by a classical channel 21. In use, first Alice 12 establishes a quantum key with first Bob 13 in the manner described above. First Alice and first Bob are then able to send data between each other securely over the classical channel linking them by encrypting that data using their shared quantum key. Furthermore, second Alice 22 establishes a quantum key with second Bob 13 in the manner described above. Second Alice and second Bob are also then able to send data between each other securely over the classical channel linking them by encrypting that data using their shared quantum key. First Bob 13 and second Alice 22 then each give their respective quantum key to trusted node 20, which combines the two quantum keys into a third key by performing a simple XOR operation. First Bob 13 and second Alice 22 then encrypt the third key using their respective quantum keys and send them to first Alice 12 and second Bob 23 respectively. First Alice 12 and second Bob 23 can then communicate data securely over the classical channel linking them by encrypting the data using the third key.

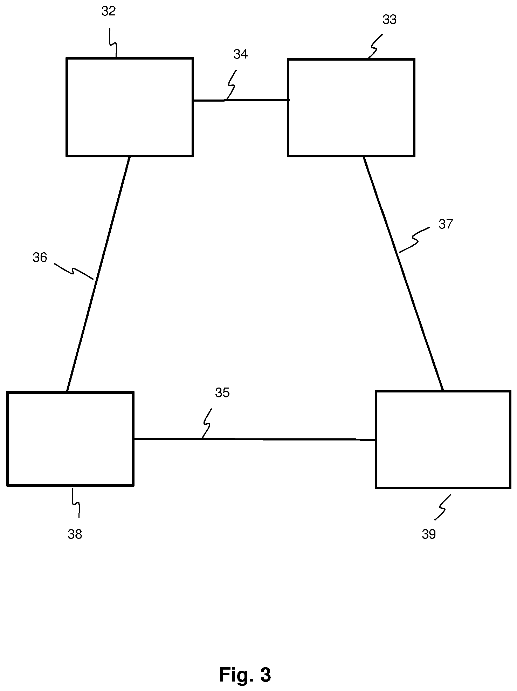

The present invention addresses the problem in a different way - see Fig. 3. In the present invention, there is a conventional QKD transmitter which I will refer to as Original Alice 32. Original Alice 32 corresponds to the first node defined above. Furthermore there is a conventional QKD receiver which I will refer to as Original Bob 33. Original Bob 33 corresponds to the second node defined above. Original Alice 32 and Original Bob 33 are linked by a quantum channel 34. The distance between Original Alice 32 and Original Bob 33 is approximately 1km.

Original Alice 32 and Original Bob 33 perform the quantum transmission stage of a conventional QKD process. In other words, for each of a string of pulses, Original Alice 32 encodes a random value in a random basis state and transmits the pulse to Original Bob 33. Alice records the value, basis state and transmission time. Original Bob 33 the measures the incoming pulse in its own randomly chosen basis state. Original Bob 33 records the basis state it used, the measured value and the receipt time.

Original Alice has established a secure link to a remote node 38 via a classical channel 36. I will refer to the remote node 38 as Virtual Alice 38. This link is secured using public key cryptography. Once the quantum transmission stage has finished, Original Alice 32 encrypts its data (i.e. the encoded value, basis state used and transmission time for each pulse) using the symmetric encryption algorithm AES512. Original Alice 32 then sends this encrypted data to Virtual Alice 38 via a classical channel 36. Virtual Alice 38 corresponds to the third node defined above. Virtual Alice 38 receives and decrypts the data. The classical channel 36 is an optical fibre. The distance between Original Alice 32 and Virtual Alice 38 is approximately 50km.

Furthermore, Original Bob 33 encrypts its own data (i.e. the measured bit value, basis state used and receipt time for each pulse) using the symmetric encryption algorithm AES512 and sends it to a remote node 39 via a classical channel 37. I will refer to the remote node 39 as Virtual Bob 39. Virtual Bob 39 corresponds to the fourth node defined above. Virtual Bob 39 receives and decrypts the data. The classical channel 37 is an optical fibre. The distance between Original Bob 33 and Virtual Bob 39 is approximately 50km. The distance between Virtual Alice 38 and Virtual Bob 39 is approximately 50km.

Please note that the distances mentioned in the preceding two paragraphs are for illustration only and could be much larger, e.g. thousands of kilometres.

Virtual Alice 38 then performs the key agreement stage with Virtual Bob 39. This key agreement stage follows the conventional QKD key agreement process described above. In particular, Virtual Bob 39 sends Virtual Alice 38 a list containing, for each pulse in the string: (i) the basis state that Original Bob 33 used; and (ii) the time that Original Bob 33 received the pulse. Virtual Alice 38 then replies to Virtual Bob 39, indicating which of the pulses Original Bob 33 measured using the same basis state that Original Alice 32 used. These transmissions between Virtual Alice 38 and Virtual Bob 39 are encrypted using a secret key shared by Virtual Alice 38 and Virtual Bob 39. Each of Virtual Alice 38 and Virtual Bob 39 then discard their bit values which correspond to pulses for which Original Alice 32 and Original Bob 33 used different basis states. This leaves Virtual Alice 38 and Virtual Bob 39 with the same list of bit values. This list is a quantum key which Virtual Alice 38 and Virtual Bob 39 can use to encrypt data for sending between them via the classical channel 35.

If the link 39 between Original Alice 32 and Virtual Alice 38 were hacked, this alone would not give the hacker the quantum key that Virtual Alice 38 and Virtual Bob 39 have established. The hacker would obtain, for each pulse, the value Original Alice 32 encoded, the basis state Original Alice 32 applied and the time of transmission by Original Alice 32. However, to obtain the quantum key, the hacker would also need the basis states original Bob 33 used when receiving the pulses. To obtain that data, the hacker would additionally have to hack the link 37 between original Bob 33 and Virtual Bob 39. Obtaining the quantum key would therefore involve cracking two totally separate AES encryptions.

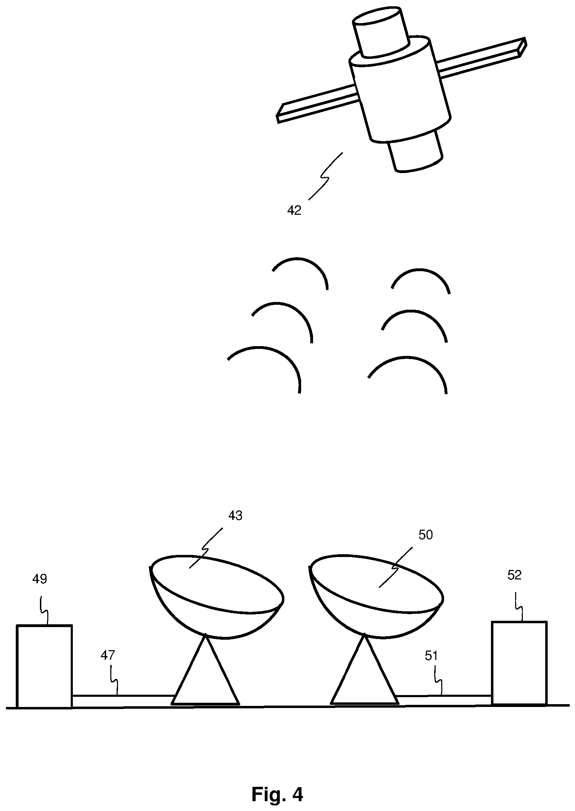

A further embodiment of the invention is depicted in Fig 4. Fig. 4 shows a satellite 42 which is capable of sending a signal to a base station 43. The base station 43 is connected by a classical channel 47 (which is an optical fibre) to the premises 49 of a customer who will be a party to the secure communication. The satellite 42 acts as the Alice in QKD and the base station 43 acts as Bob. The satellite 42 performs the quantum transmission stage of QKD with the base station 43. In other words, for each of a string of pulses, satellite 42 prepares a random bit value in a random basis state and transmits the pulse to base station 43. Satellite 42 records the bit value, basis state and transmission time. Base station 43 measures each incoming pulse in a randomly chosen basis state. Base station 43 records the basis state it used, the measured bit value and the receipt time.

Once the quantum transmission stage has finished, base station 43 encrypts the encoded bit value it measured, the basis state it used and receipt time for each pulse, using the symmetric encryption algorithm AES512. Base station 43 then sends this encrypted data to the customer 49 via a classical channel 47. The customer 49 then decrypts the data.

The satellite 42 encrypts the encoded bit value it measured, the basis state it used and receipt time for each pulse, using the symmetric encryption algorithm AES512. The satellite 42 then continues moving on its path around the globe and establishes a new quantum key with a second base station 50 by conventional QKD. The satellite 42 then encrypts the encrypted data with the quantum key and transmits it to the second base station 50. The second base station 50 decrypts the data, re-encrypts it with a key it shares with a second customer 52 and sends the re-encrypted data to the second customer 52 via link 51. The first customer 49 (Virtual Bob) and the second customer 52 (Virtual Alice) are therefore each on possession of the necessary data for performing the key agreement stage with each other. This is what they then do. In particular, customer 49 sends its record of encoded bit values and receipt times to customer 52 over a public key encrypted classical link (not shown). Customer 52 then sends customer 49 an indication of which pulses share common basis states. Both customers then discard the bit values corresponding to pulses for which different basis states were used, leaving the two customers with the same list of bit values (i.e. a shared secret quantum key). The two customer can then use this key to perform QKD encrypted communication with each other over the classical channel.

## Claims

1. A method of performing Quantum Key Distribution for generating a shared secret key, the method comprising
at a first node, preparing or measuring a plurality of non-orthogonal quantum states, each of the plurality of non-orthogonal quantum states being prepared or measured using a respective one of a first set of basis states,
at a second node, preparing or measuring the plurality of non-orthogonal quantum states each of the plurality of non-orthogonal quantum states being prepared or measured using a respective one of a second set of basis states,
at a third node, obtaining an indication of the first set of basis states from the first node and performing a key agreement stage with a fourth node to agree the shared secret key, the key agreement stage involving the first and second sets of basis states,
**characterized in that** the first node is separate from the second node and
each of the plurality of non-orthogonal quantum states comprises an optical pulse.

2. A method according to claim 1, wherein the fourth node is different to the second node.

3. A method according to claim 1 or claim 2, the method further comprising, at the third node, obtaining the first set of basis states from the first node via an optical link.

4. A method according to any preceding claim, the method further comprising transmitting, from the first node to the third node, an indication of the bit values encoded onto the plurality of non-orthogonal quantum states.

5. A method according to any preceding claim, the method further comprising transmitting, from the first node to the third node, an indication of the time of transmission of the plurality of non-orthogonal quantum states from the first node.

6. A method according to claim 4 or claim 5, wherein the transmissions between the first and third nodes are encrypted.

7. A method according to claim 6, wherein the encryption is symmetric key encryption.

8. A method according to any preceding claim, the method further comprising performing an authentication check between the third node and the fourth node.

9. A method according to any preceding claim, wherein the third and fourth node perform encrypted communication with each other using the shared quantum key.

10. A method according to any preceding claim, the method further comprising transmitting, from the second node to the fourth node, an indication of the which of the second set of basis states were used to measure the plurality of non-orthogonal quantum states.

11. A method according to claim 10, wherein the transmitting step takes place over an optical fibre.

12. A method according to claim 10 or claim 11, the method further comprising the step of encrypting the indication of which of the second set of basis states were used to measure the plurality of non-orthogonal quantum states.

13. A method according to any preceding claim, the method further comprising transmitting, from the second node to the fourth node, an indication of the measured bit values of the plurality of non-orthogonal quantum states.

14. A method according to claim 1, wherein the fourth node is the same as the second node.

15. An arrangement for performing QKD in order to generate a shared secret key, the arrangement comprising:
a first node and a second node,
the first node being adapted to prepare or measure a plurality of non-orthogonal quantum states using a respective one of a first set of basis states,
the second node being adapted to prepare or measure a plurality of non-orthogonal quantum states using a respective one of a second set of basis states,
the arrangement further comprising a third node and a fourth node,
the third node being adapted to obtain an indication of the first set of basis states from the first node, and to perform a key agreement stage with the fourth node to agree the shared secret key, the key agreement stage involving the first and second sets of basis states, **characterized in that** the first node is separate from the second node and
each of the plurality of non-orthogonal quantum states comprises an optical pulse.

## Patentansprüche

1. Verfahren zum Durchführen einer Quantenschlüsselverteilung zur Erzeugung eines gemeinsam genutzten geheimen Schlüssels, wobei das Verfahren umfasst:
an einem ersten Knoten das Präparieren oder Messen einer Vielzahl nicht-orthogonaler Quantenzustände, wobei jeder der Vielzahl nicht-orthogonaler Quantenzustände unter Verwendung eines jeweiligen Zustands einer ersten Menge von Basiszuständen präpariert oder gemessen wird,
an einem zweiten Knoten das Präparieren oder Messen der Vielzahl nicht-orthogonaler Quantenzustände, wobei jeder der Vielzahl nicht-orthogonaler Quantenzustände unter Verwendung eines jeweiligen Zustands einer zweiten Menge von Basiszuständen präpariert oder gemessen wird,
an einem dritten Knoten das Empfangen einer Angabe der ersten Menge von Basiszuständen von dem ersten Knoten und das Durchführen einer Schlüsselvereinbarungsphase mit einem vierten Knoten zum Vereinbaren des gemeinsam genutzten geheimen Schlüssels, wobei die Schlüsselvereinbarungsphase die erste und die zweite Menge von Basiszuständen umfasst,
**dadurch gekennzeichnet, dass** der erste Knoten von dem zweiten Knoten getrennt ist und jeder der Vielzahl nicht-orthogonaler Quantenzustände einen optischen Puls umfasst.

2. Verfahren nach Anspruch 1, wobei der vierte Knoten von dem zweiten Knoten verschieden ist.

3. Verfahren nach Anspruch 1 oder 2, wobei das Verfahren ferner umfasst, an dem dritten Knoten die erste Menge von Basiszuständen von dem ersten Knoten über eine optische Verbindung zu empfangen.

4. Verfahren nach einem der vorhergehenden Ansprüche, wobei das Verfahren ferner umfasst, von dem ersten Knoten zu dem dritten Knoten eine Angabe der auf die Vielzahl nicht-orthogonaler Quantenzustände codierten Bitwerte zu übertragen.

5. Verfahren nach einem der vorhergehenden Ansprüche, wobei das Verfahren ferner umfasst, von dem ersten Knoten zu dem dritten Knoten eine Angabe der Zeit der Übertragung der Vielzahl nicht-orthogonaler Quantenzustände von dem ersten Knoten zu übertragen.

6. Verfahren nach Anspruch 4 oder 5, wobei die Übertragungen zwischen dem ersten Knoten und dem dritten Knoten verschlüsselt sind.

7. Verfahren nach Anspruch 6, wobei die Verschlüsselung eine symmetrische Schlüsselverschlüsselung ist.

8. Verfahren nach einem der vorhergehenden Ansprüche, wobei das Verfahren ferner umfasst, eine Authentifizierungsprüfung zwischen dem dritten Knoten und dem vierten Knoten durchzuführen.

9. Verfahren nach einem der vorhergehenden Ansprüche, wobei der dritte und der vierte Knoten eine verschlüsselte Kommunikation miteinander unter Verwendung des gemeinsam genutzten Quantenschlüssels durchführen.

10. Verfahren nach einem der vorhergehenden Ansprüche, wobei das Verfahren ferner umfasst, von dem zweiten Knoten zu dem vierten Knoten eine Angabe darüber zu übertragen, welche der zweiten Menge von Basiszuständen zum Messen der Vielzahl nicht-orthogonaler Quantenzustände verwendet wurden.

11. Verfahren nach Anspruch 10, wobei der Übertragungsschritt über eine optische Faser erfolgt.

12. Verfahren nach Anspruch 10 oder 11, wobei das Verfahren ferner den Schritt umfasst, die Angabe darüber zu verschlüsseln, welche der zweiten Menge von Basiszuständen zum Messen der Vielzahl nicht-orthogonaler Quantenzustände verwendet wurden.

13. Verfahren nach einem der vorhergehenden Ansprüche, wobei das Verfahren ferner umfasst, von dem zweiten Knoten zu dem vierten Knoten eine Angabe der gemessenen Bitwerte der Vielzahl nicht-orthogonaler Quantenzustände zu übertragen.

14. Verfahren nach Anspruch 1, wobei der vierte Knoten mit dem zweiten Knoten identisch ist.

15. Anordnung zum Durchführen einer Quantenschlüsselverteilung zur Erzeugung eines gemeinsam genutzten geheimen Schlüssels, wobei die Anordnung umfasst:
einen ersten Knoten und einen zweiten Knoten,
wobei der erste Knoten dazu ausgelegt ist, eine Vielzahl nicht-orthogonaler Quantenzustände unter Verwendung eines jeweiligen Zustands einer ersten Menge von Basiszuständen zu präparieren oder zu messen,
wobei der zweite Knoten dazu ausgelegt ist, eine Vielzahl nicht-orthogonaler Quantenzustände unter Verwendung eines jeweiligen Zustands einer zweiten Menge von Basiszuständen zu präparieren oder zu messen,
wobei die Anordnung ferner einen dritten Knoten und einen vierten Knoten umfasst,
wobei der dritte Knoten dazu ausgelegt ist, eine Angabe der ersten Menge von Basiszuständen von dem ersten Knoten zu empfangen und eine Schlüsselvereinbarungsphase mit dem vierten Knoten zum Vereinbaren des gemeinsam genutzten geheimen Schlüssels durchzuführen, wobei die Schlüsselvereinbarungsphase die erste und die zweite Menge von Basiszuständen umfasst, **dadurch gekennzeichnet, dass** der erste Knoten von dem zweiten Knoten getrennt ist und jeder der Vielzahl nicht-orthogonaler Quantenzustände einen optischen Puls umfasst.

## Revendications

1. Procédé de réalisation d'une distribution de clé quantique pour générer une clé secrète partagée, le procédé comprenant
au niveau d'un premier nœud, la préparation ou la mesure d'une pluralité d'états quantiques non orthogonaux, chacun de la pluralité d'états quantiques non orthogonaux étant préparé ou mesuré en utilisant un état respectif d'un premier ensemble d'états de base,
au niveau d'un deuxième nœud, la préparation ou la mesure de la pluralité d'états quantiques non orthogonaux, chacun de la pluralité d'états quantiques non orthogonaux étant préparé ou mesuré en utilisant un état respectif d'un deuxième ensemble d'états de base,
au niveau d'un troisième nœud, l'obtention d'une indication du premier ensemble d'états de base à partir du premier nœud et la réalisation d'une étape d'accord de clé avec un quatrième nœud pour convenir de la clé secrète partagée, l'étape d'accord de clé faisant intervenir les premier et deuxième ensembles d'états de base,
**caractérisé en ce que** le premier nœud est distinct du deuxième nœud et chacun de la pluralité d'états quantiques non orthogonaux comprend une impulsion optique.

2. Procédé selon la revendication 1, le quatrième nœud étant différent du deuxième nœud.

3. Procédé selon la revendication 1 ou la revendication 2, le procédé comprenant en outre, au niveau du troisième nœud, l'obtention du premier ensemble d'états de base à partir du premier nœud par l'intermédiaire d'une liaison optique.

4. Procédé selon l'une quelconque des revendications précédentes, le procédé comprenant en outre la transmission, du premier nœud au troisième nœud, d'une indication des valeurs binaires codées sur la pluralité d'états quantiques non orthogonaux.

5. Procédé selon l'une quelconque des revendications précédentes, le procédé comprenant en outre la transmission, du premier nœud au troisième nœud, d'une indication du temps de transmission de la pluralité d'états quantiques non orthogonaux à partir du premier nœud.

6. Procédé selon la revendication 4 ou la revendication 5, les transmissions entre les premier et troisième nœuds étant cryptées.

7. Procédé selon la revendication 6, le cryptage étant un cryptage à clé symétrique.

8. Procédé selon l'une quelconque des revendications précédentes, le procédé comprenant en outre la réalisation d'une vérification d'authentification entre le troisième nœud et le quatrième nœud.

9. Procédé selon l'une quelconque des revendications précédentes, les troisième et quatrième nœuds effectuant entre eux une communication cryptée en utilisant la clé quantique partagée.

10. Procédé selon l'une quelconque des revendications précédentes, le procédé comprenant en outre la transmission, du deuxième nœud au quatrième nœud, d'une indication de ceux des états du deuxième ensemble d'états de base qui ont été utilisés pour mesurer la pluralité d'états quantiques non orthogonaux.

11. Procédé selon la revendication 10, l'étape de transmission ayant lieu sur une fibre optique.

12. Procédé selon la revendication 10 ou la revendication 11, le procédé comprenant en outre l'étape consistant à crypter l'indication de ceux des états du deuxième ensemble d'états de base qui ont été utilisés pour mesurer la pluralité d'états quantiques non orthogonaux.

13. Procédé selon l'une quelconque des revendications précédentes, le procédé comprenant en outre la transmission, du deuxième nœud au quatrième nœud, d'une indication des valeurs binaires mesurées de la pluralité d'états quantiques non orthogonaux.

14. Procédé selon la revendication 1, le quatrième nœud étant le même que le deuxième nœud.

15. Agencement pour la réalisation d'une QKD afin de générer une clé secrète partagée, l'agencement comprenant :
un premier nœud et un deuxième nœud,
le premier nœud étant adapté pour préparer ou mesurer une pluralité d'états quantiques non orthogonaux à l'aide d'un état respectif d'un premier ensemble d'états de base,
le deuxième nœud étant adapté pour préparer ou mesurer une pluralité d'états quantiques non orthogonaux à l'aide d'un état respectif d'un deuxième ensemble d'états de base,
l'agencement comprenant en outre un troisième nœud et un quatrième nœud,
le troisième nœud étant adapté pour obtenir une indication du premier ensemble d'états de base à partir du premier nœud, et pour réaliser une étape d'accord de clé avec le quatrième nœud pour convenir de la clé secrète partagée, l'étape d'accord de clé faisant intervenir les premier et deuxième ensembles d'états de base, **caractérisé en ce que** le premier nœud est distinct du deuxième nœud et chacun de la pluralité d'états quantiques non orthogonaux comprend une impulsion optique.
